# EUROPÄISCHE PATENTSCHRIFT

(11) **EP 2 724 698 B1**
(45) Veröffentlichungstag und Bekanntmachung des Hinweises auf die Patenterteilung: **06.01.2016**
(21) Anmeldenummer: 13188218.5
(22) Anmeldetag: 11.10.2013
(51) Int. Cl.: A61G 5/04, A61G 5/00, A61G 5/10

(54) **Separate Antriebshilfe für Rollstühle**
Separate auxiliary drive for wheelchairs
Auxiliaire d'entraînement séparé pour chaises roulantes

(30) Priorität: 26.10.2012 DE 102012219688
(43) Veröffentlichungstag der Anmeldung: 30.04.2014
(73) Patentinhaber: Hodak, Hans, 12277 Berlin (DE)
(72) Erfinder: Hodak, Johann, 12707 Berlin (DE)
(74) Vertreter: Grünecker Patent- und Rechtsanwälte PartG mbB

(56) Entgegenhaltungen:
- DE-U1-202006 014 217
- GB-A- 2 301 071
- JP-A- 2001 346 836
- US-A- 3 524 512
- US-A- 4 770 431
- US-A- 4 771 840
- US-A1- 2008 036 257
- US-B1- 6 341 791

## Beschreibung

Die Erfindung betrifft eine separate Antriebshilfe für rollbare Personen- oder Lastenträger, insbesondere für Rollstühle, mit einem Antriebsmotor, wenigstens einem Antriebsrad, wenigstens einem Sitz für einen Fahrer, und einer Kupplungseinrichtung, durch die Antriebshilfe an dem Personen- oder Lastenträger wiederholt lösbar befestigbar ist, wobei die Kupplungseinrichtung eine Achskupplung aufweist, die mit der Achse oder den Achsen eines Räderpaares des Personen- oder Lastenträgers verbindbar ausgestaltet ist.

Die vorliegende Erfindung eignet sich für den Antrieb von verschiedensten Lastenträgern wie zum Beispiel Werkstattwagen, Aktenwagen oder Handwagen. Der Übersichtlichkeit halber wird die vorliegende Erfindung an einem Rollstuhl beschrieben, ohne dabei die Verwendung an anderen Rollwagen auszuschließen.

Externe Antriebshilfen für Rollstühle sind allgemein bekannt. In der Regel werden elektrische Antriebsaggregate an den großen Rollstuhlantriebsrädern oder unterhalb des Rollstuhls angebracht. Rollstuhlantriebshilfen, die zur Beförderung einer Begleitperson dienen, sind in der Regel fahrradartig konstruiert und entsprechend sperrig. Dies ist von großem Nachteil, wenn Rollstuhl und Antriebshilfe gemeinsam zum Beispiel in einem Kofferraum verstaut werden sollen. Kompakte Antriebshilfen, auf denen ein Fahrer mitfahren kann und für die ein elektrischer Antrieb vorgesehen ist, sind nur wenige bekannt. Die bekannten Vorrichtungen weisen allerdings Nachteile auf, welche bei der erfindungsgemäßen Vorrichtung nicht auftreten.

Die Schubeinrichtung aus DE 20 2006 014 217 U1 nutzt ein Einrad, welches mittels einer Schubstange an einer Querstrebe am Rollstuhlrahmen befestigt wird. Die Querstrebe wird dabei mittels Klemmverschlüssen an den Vertikalrohren des Rollstuhlrahmens befestigt. Zur Verbesserung der Nachlaufeigenschaften ist der Sattel gegenüber dem Antriebsrad versetzt. Das Gespann dieser Druckschrift dürfte recht schwergängig sein.

Die Vorrichtung zum Zwecke des Anschiebens aus EP 1 364 634 A2 weist einen brettförmigen Hauptkörper auf. Zur Befestigung des Hauptkörpers am Rollstuhl werden an Letzterem zwei Querbretter an die unteren Endrohre des Rollstuhlrahmens angebracht. Zwischen diese wird dann das vordere Ende des Hauptkörpers geklemmt und durch einen Bolzen mit diesem verbunden. Dieser Bolzen stellt zugleich ein Drehgelenk dar und bildet die Lenkachse des Gefährts. Auch dieses Gefährt erfordert erhebliche Kräfte beim Lenken und ist nur eingeschränkt manövrierfähig.

Es ist also die Aufgabe der Erfindung, eine externe Antriebshilfe für rollbare Personen- oder Lastenträger bereitzustellen, die im Gespann mit dem Rollstuhl eine agile Handhabung ermöglichen soll, so dass auch alte Personen die Antriebshilfe nutzen können, und die einfach mit einem Personen- oder Lastenträger verbindbar ist.

Diese Aufgabe wird für die eingangs genannte separate Antriebshilfe dadurch gelöst, dass der Sitz aus einer Betriebsstellung in eine Transportstellung beweglich ist, dass der Sitz über eine Betätigungseinrichtung mit der Kupplungseinrichtung verbunden ist, und dass in der Transportstellung die Kupplungseinrichtung über die Betätigungseinrichtung in eine Montagestellung überführt ist, in der die Antriebshilfe am Personen- oder Lastenträger befestigbar ist.

Die erfindungsgemäße Lösung kann durch verschiedene, jeweils für sich vorteilhafte, beliebig miteinander kombinierbare Ausgestaltungen weiter verbessert werden. Auf diese Ausgestältungsformen und die mit ihnen verbundenen Vorteile ist im Folgenden eingegangen, wobei die konstruktiven Maßnahmen und deren Wirkungen lediglich beispielhaft für eine Antriebshilfe an einem Rollstuhl beschrieben sind. Selbstverständlich kann die Antriebshilfe auch an anderen rollbaren Wagen, wie zum Beispiel die anfangs erwähnten Werkstatt- oder Aktenwagen, verwendet werden.

Die erfindungsgemäße Antriebshilfe kann in einer Ausgestaltung im Wesentlichen aus einem Körper, welcher das Antriebsaggregat enthält, und einem Gestänge, das die Verbindung zum Rollstuhl herstellt, bestehen. Am Körper der Antriebshilfe können sich das Antriebsrad bzw. die Antriebsräder, wenigstens ein Sitz für einen Fahrer sowie seitliche Fußauflagen befinden.

In einer besonders vorteilhaften Ausführung kann die Antriebshilfe nur ein einziges Rad besitzen, welches gleichzeitig das Antriebsrad der Antriebshilfe und damit des kombinierten Gefährts darstellt. Alternativ kann die Antriebshilfe auch zwei Räder besitzen, insbesondere zwei nebeneinander positionierte Räder, die zusammen ein Doppelrad bilden.

Die Sitzgelegenheit für den Fahrer kann über dem Antriebsrad positioniert sein, so dass die Gewichtskraft des Fahrers über das Antriebsrad in den Boden geleitet wird. Dies ist vorteilhaft, da eine zu starke Belastung des Rollstuhls mit dem Gewicht des Fahrers vermieden wird. Als Sitzgelegenheit kann zum Beispiel ein Fahrradsattel verwendet werden. Die Sitzgelegenheit kann höhenverstellbar sein, um an die Größe des Fahrers angepasst zu werden. Die Sitzgelegenheit kann von einer Stütze getragen sein, deren Achse in Schwerkraftrichtung verlängert die Achse des Antriebsrads schneidet. Dabei können Abweichungen der Achsen bis zu 2 cm tolerierbar sein. In einer besonders vorteilhaften Ausführung kann die Sitzgelegenheit einklappbar sein, um die Antriebshilfe platzsparend verstauen zu können. Sie kann dann zum Beispiel im Kofferraum eines Pkws transportiert werden.

Zwischen dem Sitz für den Fahrer und der Kupplungseinrichtung kann die Antriebshilfe seitliche Fußauflagen für den Fahrer aufweisen. Diese Fußauflagen können auch als Fußhebel ausgebildet sein, mit denen Antriebskraft und Bremskraft gesteuert werden. Die Fußhebel können als Wippe ausgestaltet sein, deren längeres Ende in Fahrtrichtung weist und als Auflage für den Vorfuß des Fahrers dient, und deren kürzeres Ende entgegen die Fahrtrichtung weist und als Auflage für die Ferse des Fahrers dient. Die Größe der Fußauflagen kann gängigen Schuhgrößen entsprechen, wobei die Länge bevorzugt zwischen 15 und 35 cm. betragen kann.

Die Wippen können so angeordnet sein, dass die Füße des Fahrers auf diesen ohne Anstrengung für den Fahrer ruhen können. Aus dieser Ruhelage heraus können die Wippen als Fußhebel leichtgängig betätigt werden. Die Auflage der Füße und die Betätigung der als Fußhebel ohne Kraftaufwand sind wichtige Eigenschaften für die Nutzung der Antriebshilfe durch ältere Personen.

An handelsüblichen Faltrollstühlen sind die großen Antriebsräder in der Regel einzeln aufgehängt. Die Achsen der beiden einzelnen Räder setzen sich dabei ein Stück weit nach innen fort. An diesen fortgesetzten Achsen kann die Kupplungseinrichtung angebracht werden. In einer besonders vorteilhaften Ausführung können diese fortgesetzten Achsen zum Beispiel durch ein Rohr oder ein Gestänge miteinander verbunden werden, so dass eine einzige Achse entsteht. Die Verbindung stellt dann eine Achskupplung dar. Diese Achskupplung kann im Wesentlichen ein Teil der Kupplungseinrichtung sein.

An der Mitte der Kupplungseinrichtung kann eine Schubstange der Antriebshilfe angebracht sein, so dass ein T-förmiges Gestänge entsteht, wobei die Kupplungseinrichtung einen Querschenkel davon darstellt. Die Schubkraft der Antriebshilfe wirkt in diesem Fall über das Gestänge auf die Achsen der Rollstuhlräder. Die Verbindung der Schubstange mit dem Querschenkel kann über ein dreh- und schwenkbares Gelenk erfolgen, so dass das Gefährt lenkbar ist und auch Unterschiede in der Neigung des Untergrunds ausgleichen kann.

Die Drehachse und die Schwenkachse des Gelenks können möglichst nah an der Achse der beiden Rollstuhlräder liegen. Bevorzugt schneidet die Drehachse des Gelenks die Achse der Rollstuhlräder, wodurch eine leichte Lenkung des kombinierten Gefährts aus Rollstuhl und Antriebshilfe möglich wird. Konstruktions- und fertigungsbedingte Abweichungen bis zu 4 cm können dabei tolerierbar sein.

Die Schwenkachse des Gelenks kann bevorzugt mit der Achse der Rollstuhlräder übereinstimmen. Dabei können konstruktions- und fertigungsbedingte Abweichungen bis zu 2 cm tolerierbar sein. Diese Art der Befestigung der Antriebshilfe an der Achse der Rollstuhlräder führt zu einer vorteilhaften Kraftübertragung zwischen Antriebshilfe und Rollstuhl. Es werden keine Kippbewegungen wie bei anderen Antriebshilfen im Stand der Technik induziert. Da die Antriebskraft nicht über den Rahmen übertragen wird, entstehen keine Verluste durch Bewegung oder Verformungen des Rahmens.

Die Art der Befestigung ermöglicht es, die Antriebshilfe auch bei bereits vorhandenen Rollstühlen nachzurüsten.

Ein Einklappmechanismus für die Sitzgelegenheit kann so gestaltet sein, dass die Bewegung der Sitzgelegenheit über eine Betätigungseinrichtung, bestehend aus Kraftübertragungselementen, wie Gestänge oder Bowdenzüge, auf eine Kupplungseinrichtung der Antriebshilfe übertragen wird. So kann zum Beispiel eine Verriegelung am Rollstuhl ausgelöst werden, die die Antriebshilfe am Rollstuhl ankuppelt, wenn die Sitzgelegenheit aufgeklappt wird, und wieder löst, wenn die Sitzgelegenheit eingeklappt wird. Die Antriebshilfe kann einen Ständer besitzen, der die Antriebshilfe aufstützt, wenn diese nicht am Rollstuhl befestigt ist. Dieser Ständer kann einklappbar sein, um ihn am Körper der Antriebshilfe anzulegen, wenn er nicht benötigt wird.

Zur Lenkung des kombinierten Gefährts aus Rollstuhl und Antriebhilfe können die Rollstuhlhaltegriffe verwendet werden. Es ist dann keine zusätzliche Lenkvorrichtung notwendig. An der Schubstange der Antriebshilfe kann der Abstand zwischen Antriebshilfe und Rollstuhl verändert werden. Dadurch kann der Abstand der Haltegriffe zum Fahrer auf die Körpergröße und Armlänge des Fahrers eingestellt werden, so dass dieser die Haltegriffe bequem erreichen und sicher halten kann.

Die Stütze für den Sitz kann gabelförmig mit einer doppelschenkligen und einer einschenkligen Seite ausgestaltet und auf ihrer doppelschenkligen Seite mit Befestigungsorganen an den Seiten des Körpers der Antriebshilfe unverlierbar verbunden sein. Die gabelförmige Stütze kann eine Querstrebe aufweisen, die die beiden Gabelschenkel der doppelschenkligen Seite der Stütze miteinander verbindet und die in der Transportstellung von oben zugänglich ist. Die Querstrebe kann als Tragegriff oder als Befestigung für einen Tragegriff ausgestaltet sein, so dass die Antriebshilfe in der Transportstellung an diesem transportierbar ist.

Eine vorteilhafte Ausführung der Antriebshilfe kann einen Elektromotor als Antrieb und einen Akkumulator als Energieträger nutzen. Alternativ kann zum Beispiel statt eines Akkumulators eine Brennstoffzelle verwendet werden oder anstelle eines Elektromotors ein Verbrennungsmotor. Bei der Ausführung mit Elektromotor und Akkumulator kann die Aufladung des Akkumulators direkt am Gerät über eine Buchse am Gehäuse erfolgen, oder der Akkumulator kann entnehmbar sein, um ihn an einem Ladegerät zu laden.

Die Antriebseinheit kann einen Antriebsmotor mit einem Untersetzungsgetriebe, insbesondere mit einem Schneckengetriebe aufweisen. Die Geschwindigkeit der Antriebshilfe und des kombinierten Gefährts aus Rollstuhl und Antriebshilfe kann zulassungsbedingt gedrosselt sein, insbesondere auf eine Schrittgeschwindigkeit von 6 km/h.

Die Antriebshilfe kann eine Sicherheitseinrichtung aufweisen, durch die eine Anfahrbeschleunigung begrenzt ist. Die Begrenzung der Anfahrbeschleunigung kann insbesondere durch eine Drehmomentsbegrenzung erflogen. Dadurch ist eine Beschleunigung möglich, die für alte oder kranke Personen eine sichere Fahrweise erlaubt.

Im Folgenden ist die Erfindung beispielhaft anhand eines Ausführungsbeispiels mit Bezug auf die Zeichnungen erläutert.

Es zeigen:
- Fig. 1: eine schematische Darstellung eines Ausführungsbeispiels einer erfindungsgemäßen Antriebshilfe an einem Rollstuhl in Seitenansicht;
- Fig. 2: das Ausführungsbeispiel aus Fig. 1 in der Draufsicht;
- Fig. 3: eine schematische Darstellung des Ausführungsbeispiels aus Fig. 1, vom Rollstuhl abgekoppelt in einer Transportstellung.

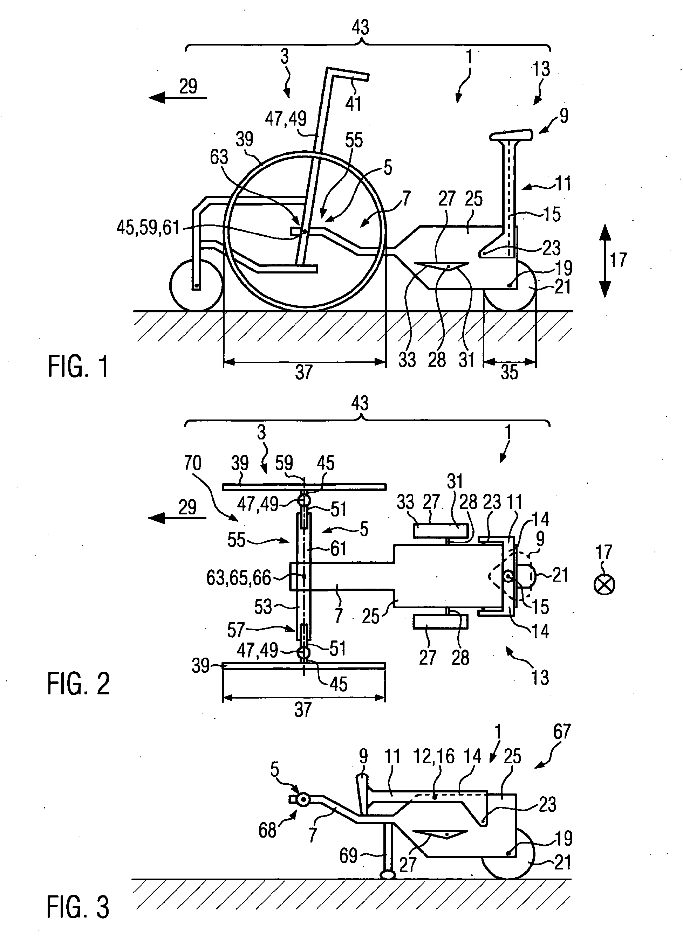

Fig. 1 zeigt eine separate Antriebshilfe 1, verbunden mit einem Rollstuhl 3 in einer Betriebsstellung 13. Die Antriebshilfe 1 ist mit ihrer Kupplungseinrichtung 5 am rollstuhlseitigen Ende der Schubstange 7 am Rollstuhl 3 befestigt.

Antriebshilfe 1 und Rollstuhl bilden zusammen das kombinierte Gefährt 43.

In dieser Betriebsstellung 13 sind der Sitz 9 und die dazugehörige Stütze 11 aufgeklappt. Der Sitz 9 befindet sich über dem Antriebsrad 21, wobei die Längsachse 15 in Schwerkraftrichtung 17 verlängert, die Radachse 19 des Antriebsrades 21 schneidet. Dabei sind konstruktions- und fertigungsbedingte Abweichungen der Längsachse 15 der Stütze 11 und der Radachse 19 des Antriebsrades 21 bis zu 2 cm tolerierbar. Die Stütze 11 ist durch Befestigungsorgane 23 mit dem Körper 25 der Antriebshilfe 1 unverlierbar verbunden.

Am Körper 25 der Antriebshilfe 1 befinden sich paarweise Fußauflagen 27. Diese Fußauflagen 27 befinden sich zwischen dem Sitz 9 für den Fahrer und der Kupplungseinrichtung 5 seitlich am Körper 25 der Antriebshilfe 1. Die Fußauflagen 27 sind durch Befestigungsorgane 28 mit dem Körper 25 der Antriebshilfe 1 unverlierbar verbunden. Sie dienen zur Auflage der Füße des Fahrers während der Fahrt. Breite und Länge der Fußauflagen 27 sind and die Schuhgröße einer durchschnittlich großen Person angepasst, so dass jeweils der gesamte Fuß des Fahrers aufgelegt werden kann. Dies erlaubt eine bequeme und sichere Sitzhaltung und eine entspannte Fahrweise, was insbesondere für ältere Personen besonders vorteilhaft ist.

Die Fußauflagen 27 besitzen die Form einer Wippe mit einem längeren Ende 33 und einem kürzeren Ende 31. Das längere Ende 33 weist in Fahrtrichtung 29 und dient zur Auflage des Vorfußes des Fahrers, das kürzere Ende 31 weist entgegen die Fahrtrichtung 29 und dient zur Auflage der Ferse des Fahrers.

Die wippenförmige Fußauflage 27 ist um eine quer zur Fahrtrichtung weisende Achse in zwei Richtungen schwenkbar. Die Schwenkachse fällt bevorzugt mit der Achse des Befestigungselements 28 zusammen. Die Fußauflagen 27 sind als Fußhebel ausgestaltet, mit denen Antriebskraft und Bremskraft steuerbar sind. Ein Herunterdrücken des vorderen Endes 33 der Fußauflage 27 kann z. B. die Stärke der Antriebskraft steuern. Ein Druck auf das hintere Ende 31 der Fußauflage 27 kann die Bremsen des Gefährts 43 betätigen. Der Schwenkbereich der Fußauflagen 27 ist auf einen Bereich begrenzt, der die Ausführung der Steuerfunktionen erlaubt.

Die Oberseite der Fußauflagen 27 ist im Wesentlichen plan ausgestaltet. Sie kann mit einer Struktur oder einer Beschichtung versehen sein, die rutschmindernde Eigenschaften aufweist, um ein Abrutschen eines Fußes während der Fahrt zu verhindern. Dies verbessert die Sicherheit für den Fahrer.

Die Fußauflagen 27 können aus einem Metall gefertigt sein. Es können aber auch, bei hinreichender Festigkeit, andere Materialien wie z.B. Kunst- oder Verbundstoffe oder Holz verwendet werden.

Der Durchmesser 35 des Antriebsrades 21 ist bevorzugt kleiner als die Hälfte des Durchmessers 37 der Rollstuhlräder 39 des Rollstuhls 3. Das Antriebsrad 21 ist unverlierbar mit dem Körper 25 der Antriebshilfe 1 verbunden und befindet sich zu einem Teil innerhalb des Körpers 25. dadurch wird eine Berührung des Fahrers mit dem Antriebsrad 21 verhindert. Im Inneren des Körpers 25 der Antriebshilfe 1 befinden sich außerdem die Antriebseinheit, bestehend aus einem Elektromotor und einem Energieträger, wie z. B. einem Akkumulator.

Die Haltegriffe 41 des Rollstuhls 3 dienen als Haltegriffe für den Fahrer und gleichzeitig als Lenkergriffe für das kombinierte Gefährt 43 aus Rollstuhl 3 und Antriebshilfe 1. Der Fahrer nimmt dadurch eine sichere Haltung auf der Antriebshilfe 1 ein und kann das Gefährt 43 bequem und leichtgängig lenken.

Fig. 2 zeigt das Ausführungsbeispiel aus Fig. 1 in der Betriebsstellung 13 in der Draufsicht. Zur übersichtlicheren Darstellung sind vom Rollstuhl 3 nur die zur Beschreibung notwendigen Elemente dargestellt.

Bei handelsüblichen Faltrollstühlen sind die Räder 39 einzeln aufgehängt. Die beiden Räder 39 bilden das Räderpaar 40. Die Achsen 45 der Räder 39 durchstoßen die Rohre 47 des Rollstuhlrahmens 49 und werden zur Befestigung ein Stück weit nach innen fortgesetzt. An diesen nach innen verlängerten Achsen 51 wird die Kupplungseinrichtung 5 der Antriebshilfe 1 unverlierbar befestigt. Rollstuhl und Antriebshilfe 1 bilden dann gemeinsam das Gefährt 43. Die Kupplungseinrichtung 5 wird im Wesentlichen aus einem quer zur Fahrtrichtung 29 weisenden Schenkel 53 gebildet.

Der Querschenkel 53 ist im Wesentlichen rohrförmig ausgebildet. Er ist unverlierbar über eine Achskupplung 57 mit den nach innen verlängerten Achsen 51 verbunden. Lässt sich der Querschenkel 53 nicht direkt an den nach innen verlängerten Achsen 51 befestigen, kann die Kupplungseinrichtung 5 Adapter aufweisen, die zunächst an den nach innen verlängerten Achsen 51 angebracht werden um eine Befestigung des Querschenkels 53 zu ermöglichen.

Die Kupplungseinrichtung 5 bildet also eine gemeinsame starre Achse der beiden Rollstuhlräder 39. Dies erhöht die Stabilität des Gefährts 43 und verbessert die Fahreigenschaften. Die Schubkraft der Antriebshilfe 1 wird über diese Achse auf die Rollstuhlräder 39 übertragen.

Der Querschenkel 53 ist mit den Rollstuhlradachsen 45 schwenkbar verbunden, so dass die Achse des Querschenkels 53 eine Schwenkachse 59 des kombinierten Gefährts 43 bildet. Der Querschenkel 53 ist bevorzugt schwenkbar mit den Rollstuhlradachsen 45 verbunden. Dann fallen die Schwenkachse 59 des Gefährts 43 und die gemeinsame Achse 61 der Rollstuhlräder 39 zusammen. Diese Position der Schwenkachse 59 erlaubt es, die Fahreigenschaften des Gefährts 43 insbesondere beim Überwinden von kleinen Hindernissen oder beim Befahren von Steigungen wesentlich zu verbessern.

Wird dagegen der Querschenkel 53 nicht schwenkbar mit den nach innen verlängerten Achsen 51 verbunden, sondern fest am Rollstuhl 3 angebracht, kann die Verbindung der Schubstange 7 zum Querschenkel 53 schwenkbar ausgestaltet sein. In diesem Fall sind konstruktionsbedingte Abweichungen der Lage der Schwenkachse 59 zur Achse 61 der Räder 39 bis zu 2 cm tolerierbar.

Die Schubstange 7 ist an ihrem in Fahrtrichtung 29 weisenden Ende mit der Kupplungseinrichtung 5 verbunden. Der Querschenkel 53 besitzt dazu eine Aufnahme 54, an der ihn die Schubstange 7 durchsetzt. Die Schubstange 7 ist durch ein Befestigungselement 63 unverlierbar mit dem Querschenkel 53 verbunden. Schubstange 7 und Querschenkel 53 bilden zusammen ein im Wesentlichen T-förmiges Gestänge 55.

Die Verbindung von Schubstange 7 zum Querschenkel 53 ist um eine vertikale Achse drehbar ausgestaltet. Die Aufnahme 54 ist als Öffnung gestaltet, deren Größe und Querschnitt der Schubstange angepasst ist und hinreichend groß ist, um eine Bewegung um die vertikale Achse zu erlauben. Diese Achse bildet die Lenkachse 65 des kombinierten Gefährts 43. Die Lenkachse 65 fällt bevorzugt mit der Achse des Befestigungselements 63 zusammen.

Die Lenkachse 65 schneidet die Achse 61 der Rollstuhlräder 39. Dadurch wird eine besonders leichte Lenkung des kombinierten Gefährts 43 ermöglicht. Konstruktions- und fertigungstechnisch bedingte Abweichungen von Lenkachse 65 und der Achse 61 des Räderpaares von bis zu 4 cm sind dabei tolerierbar.

Die Verbindung von Schubstange 7 zum Querschenkel 53 bildet also ein in zwei Achsen drehbares Gelenk 66.

Die Stütze 11 des Sitzes 9 ist gabelförmig und mit den beiden Gabelschenkeln 14 an den Seiten des Körpers 25 der Antriebshilfe 1 durch Befestigungsorgane 23 verbunden.

Fig. 3 zeigt die Antriebshilfe 1 in der Transportstellung 67 abgekoppelt vom Rollstuhl 3. Der Sitz 9 und die dazugehörige Stütze 11 sind in dieser Stellung eingeklappt. In dem Ausführungsbeispiel ist das Gestänge 55 so ausgestaltet, dass der Sitz 9 platzsparend eingeklappt werden kann.

Die Antriebshilfe 1 besitzt in der Transportstellung 67 eine kleinere Kubatur als in der Betriebsstellung 13. Sie ist daher platzsparend und leicht zu verstauen, zum Beispiel im Kofferraum eines Pkws.

In dem Ausführungsbeispiel hat das Einklappen von Sitz 9 und der Stütze 11 über eine Betätigungseinrichtung 64 die Kupplungseinrichtung 5 vom Rollstuhl 3 gelöst. Die Antriebshilfe 1 ist daher vom Rollstuhl 3 abgekoppelt.

In der dargestellten Transportstellung 67 ruht die Antriebshilfe 1 auf einem Ständer 69, welcher in der Betriebsstellung 13 an den Körper 25 der Antriebshilfe 1 angelegt oder in den Körper 25 eingeschoben werden kann.

Die gabelförmige Stütze 11 weist eine Querstrebe 12 auf, die die beiden Gabelschenkel 14 miteinander verbindet. Die Querstrebe 12 verleiht der Stütze 11 zusätzliche Stabilität. Die Querstrebe 12 ist als Tragegriff 16 ausgestaltet oder kann einen Tragegriff tragen, so dass die Antriebshilfe 1 in der Transportstellung 67 an diesem Tragegriff 16 angehoben und transportiert werden kann.

### Bezugszeichen

- 1: Antriebshilfe
- 3: Rollstuhl
- 5: Kupplungseinrichtung
- 7: Schubstange
- 9: Sitz
- 11: Stütze
- 12: Querstrebe
- 13: Betriebsstellung
- 14: Gabelschenkel
- 15: Längsachse der Stütze
- 16: Tragegriff
- 17: Schwerkraftrichtung
- 19: Achse des Antriebsrades
- 21: Antriebsrad
- 23: Befestigungsorgan
- 25: Körper der Antriebshilfe
- 27: Fußauflage
- 28: Befestigungsorgane
- 29: Fahrtrichtung
- 31: kurzes Ende der Fußauflage
- 33: langes Ende der Fußauflage
- 35: Durchmesser des Antriebsrades
- 37: Durchmesser der Rollstuhlräder
- 39: Rollstuhlräder
- 40: Räderpaar
- 41: Rollstuhlhaltegriffe
- 43: kombiniertes Gefährt
- 45: Achsen der Rollstuhlräder
- 47: Rohr
- 49: Rollstuhlrahmen
- 51: nach innen verlängerte Achsen
- 53: Querschenkel
- 54: Aufnahme
- 55: Gestänge
- 57: Achskupplung
- 59: Schwenkachse
- 61: Achse des Räderpaares
- 63: Befestigungselement
- 64: Betätigungseinrichtung
- 65: Lenkachse
- 66: Gelenk
- 67: Transportstellung
- 68: Montagestellung
- 69: Ständer
- 70: Kupplungsstellung
- 71: Betätigungseinrichtung

## Patentansprüche

1. Separate Antriebshilfe (1) für rollbare Personen- oder Lastenträger, insbesondere für Rollstühle (3), mit einem Antriebsmotor, wenigstens einem Antriebsrad (21), wenigstens einem Sitz (9) für einen Fahrer, und einer Kupplungseinrichtung (5), durch die die Antriebshilfe (1) an dem Personen- oder Lastenträger (3) wiederholt lösbar befestigbar ist, **dadurch gekennzeichnet, dass** die Kupplungseinrichtung (5) eine Achskupplung (57) aufweist, die mit der Achse oder den Achsen (45) eines Räderpaares (40) des Personen- oder Lastenträgers (3) verbindbar ausgestaltet ist, wobei der Sitz (9) aus einer Betriebsstellung (13) in eine Transportstellung (67) beweglich ist, wobei der Sitz (9) über eine Betätigungseinrichtung (64) mit der Kupplungseinrichtung (5) verbunden ist, und wobei in der Transportstellung (67) die Kupplungseinrichtung (5) über die Betätigungseinrichtung (64) in eine Montagestellung (68) überführt ist, in der die Antriebshilfe (1) am Personen- oder Lastenträger (3) befestigbar ist.

2. Separate Antriebshilfe (1) nach Anspruch 1, **gekennzeichnet durch** ein Gestänge (55), mit einem quer zu einer Fahrtrichtung (29) des Personen- oder Lastenträgers (3) weisenden Querschenkel (53), der mit der Achse oder den Achsen (45) des Räderpaares (40) verbunden ist.

3. Separate Antriebshilfe (1) nach Anspruch 2, **dadurch gekennzeichnet, dass** das Gestänge (55) T-förmig ist, wobei zwischen dem Querschenkel (53) und dem Antriebsrad (21) das Gestänge (55) eine in Fahrtrichtung (29) weisende Schubstange (7) aufweist.

4. Separate Antriebshilfe (1) nach einem der Ansprüche 2 bis 3, **dadurch gekennzeichnet, dass** die in Fahrtrichtung (29) weisende Schubstange (7) des T-förmigen Gestänges (55) in der Länge verstellbar ist.

5. Separate Antriebshilfe (1) nach einem der Ansprüche 2 bis 4, **dadurch gekennzeichnet, dass** der quer zur Fahrtrichtung (29) weisende Schenkel (53) mit der parallel zur Fahrtrichtung (29) weisenden Schubstange (7) über ein in wenigstens zwei Achsen drehbares Gelenk (66) verbunden ist.

6. Separate Antriebshilfe (1) nach Anspruch 5, **dadurch gekennzeichnet, dass** eine der Achsen des Gelenks (66) eine Lenkachse (65) eines kombinierten Gefährts (43) aus Antriebshilfe (1) und Personen- oder Lastenträger (3) ausbildet, wobei die Lenkachse (65) eine Drehachse (61) des Räderpaares (40) schneidet.

7. Separate Antriebshilfe (1) nach einem der Ansprüche 5 oder 6, **dadurch gekennzeichnet, dass** eine Schwenkachse (59) des Gelenks (65) innerhalb der Drehachse (61) des Räderpaares (40) liegt.

8. Separate Antriebshilfe (1) nach einem der Ansprüche 1 bis 7, **dadurch gekennzeichnet, dass** der Sitz (9) unverlierbar mit der Antriebshilfe (1) verbunden ist, und sich wenigstens in einer Betriebsstellung (13) in Schwerkraftrichtung (17) über dem Antriebsrad (21) befindet.

9. Separate Antriebshilfe (1) nach einem der Ansprüche 1 bis 8, **dadurch gekennzeichnet, dass** der Sitz (9) eine Stütze (11) aufweist, deren Längsachse (15) wenigstens in einer Betriebsstellung (13) in Schwerkraftrichtung (17) verlängert die Achse (19) des Antriebsrades (21) schneidet.

10. Separate Antriebshilfe (1) nach einem der Ansprüche 1 bis 9, **dadurch gekennzeichnet, dass** die Kubatur der Antriebshilfe (1) in der Transportstellung (67) kleiner als in der Betriebsstellung (13) ist.

11. Separate Antriebshilfe (1) nach einem der Ansprüche 1 bis 10, **dadurch gekennzeichnet, dass** die Stütze (11) für den Sitz (9) gabelförmig mit einer doppelschenkligen und einer einschenkligen Seite ist, und auf ihrer doppelschenkligen Seite mit Befestigungsorganen (23) an den Seiten des Körpers (25) der Antriebshilfe (1) unverlierbar verbunden ist.

12. Separate Antriebshilfe (1) nach Anspruch 11, **dadurch gekennzeichnet, dass** die gabelförmige Stütze (11) eine Querstrebe (12) aufweist, die die beiden Gabelschenkel (14) der doppelschenkligen Seite der Stütze (11) miteinander verbindet und die in der Transportstellung (67) von oben zugänglich ist.

13. Separate Antriebshilfe (1) nach Anspruch 12, **dadurch gekennzeichnet, dass** die Querstrebe (12) als Tragegriff (16) oder als Befestigung für einen Tragegriff ausgestaltet ist, so dass die Antriebshilfe (1) in der Transportstellung (67) an diesem transportierbar ist.

14. Separate Antriebshilfe (1) nach einem der Ansprüche 1 bis 13, **dadurch gekennzeichnet, dass** in der Betriebsstellung (13) die Kupplungseinrichtung (5) über die Betätigungseinrichtung (64) in eine Kupplungsstellung (70) überführt ist, in der die Antriebshilfe (1) am Personen- oder Lastenträger (3) verriegelt ist.

15. Separate Antriebshilfe (1) nach einem der Ansprüche 1 bis 14, **dadurch gekennzeichnet, dass** der Durchmesser (35) des Antriebsrades (21) oder der Antriebsräder (21) höchstens halb so groß wie der Durchmesser (37) der Räder (39) des mit der Antriebshilfe (1) verbundenen Räderpaares (40) des Personen- oder Lastenträgers (3) ist.

## Claims

1. Separate auxiliary drive (1) for a rollable person carrier or load carrier, in particular for wheelchairs (3), comprising a drive motor, at least one drive wheel (21), at least one seat (9) for an operator, and a coupling device (5), by means of which the auxiliary drive (1) can be fixed to the person carrier or load carrier (3) so as to be repeatedly releasable, **characterised in that** the coupling device (5) has an axle coupling (57) which is formed so as to be able to be connected to the axle or axles (45) of a pair of wheels (40) of the person carrier or load carrier (3), the seat (9) being moveable from an operating position (13) to a transport position (67), the seat (9) being connected to the coupling device (5) via an actuation device (64), and the coupling device (5), in the transport position (67), being transferred via the actuation device (64) into an assembly position (68), in which the auxiliary drive (1) can be fixed to the person carrier or load carrier (3).

2. Separate auxiliary drive (1) according to claim 1, **characterised by** a rod assembly (55), comprising a cross-limb (53) which is directed transversely to a direction of travel (29) of the person carrier or load carrier (3), which cross-limb is connected to the axle or the axles (45) of the pair of wheels (40).

3. Separate auxiliary drive (1) according to claim 2, **characterised in that** the rod assembly (55) is T-shaped, the rod assembly (55) having a connecting rod (7), pointing in the direction of travel (29), between the cross-limb (53) and the drive wheel (21).

4. Separate auxiliary drive (1) according to either claim 2 or claim 3, **characterised in that** the connecting rod (7), pointing in the direction of travel (29), of the T-shaped rod assembly (55) is adjustable in length.

5. Separate auxiliary drive (1) according to any of claims 2 to 4, **characterised in that** the cross-limb (53), which is directed transversely to a direction of travel (29), is connected to the connecting rod (7), which is directed parallel to the direction of travel (29), via a joint (66) that can be rotated about at least two axes.

6. Separate auxiliary drive (1) according to claim 5, **characterised in that** one of the axes of the joint (66) forms a steering axle (65) for a combined vehicle (43) consisting of the auxiliary drive (1) and person carrier or load carrier (3), the steering axle (65) intersecting with an axis of rotation (61) of the pair of wheels (40).

7. Separate auxiliary drive (1) according to either claim 5 or claim 6, **characterised in that** a swivel axis (59) of the joint (65) lies within the axis of rotation (61) of the pair of wheels (40).

8. Separate auxiliary drive (1) according to any of claims 1 to 7, **characterised in that** the seat (9) is permanently connected to the auxiliary drive (1) and is situated in at least one operating position (13) in the direction of gravitational force (17) above the drive wheel (21).

9. Separate auxiliary drive (1) according to any of claims 1 to 8, **characterised in that** the seat (9) has a support (11), the longitudinal axis (15) of which, at least in one operating position (13) and when extended in the direction of gravitational force (17), crosses the axle (19) of the drive wheel (21).

10. Separate auxiliary drive (1) according to any of claims 1 to 9, **characterised in that** the cubature of the auxiliary drive (1) in the transport position (67) is smaller than in the operating position (13).

11. Separate auxiliary drive (1) according to any of claims 1 to 10, **characterised in that** the support (11) for the seat (9) is forked, having one double-limbed side and one single-limbed side, and is permanently connected, on the double-limbed side thereof, to fixtures (23) at the sides of the body (25) of the auxiliary drive (1).

12. Separate auxiliary drive (1) according to claim 11, **characterised in that** the forked support (11) has a cross strut (12) which interconnects both fork legs (14) of the double-limbed side of the support (11) and which is accessible from above in the transport position (67).

13. Separate auxiliary drive (1) according to claim 12, **characterised in that** the cross strut (12) is formed as a carrying handle (16), or as a fastening for a carrying handle, so that the auxiliary drive (1) can be transported thereby in the transport position (67).

14. Separate auxiliary drive (1) according to any of claims 1 to 13, **characterised in that**, in the operating position (13), the coupling device (5) is transferred into a coupling position (70) via the actuation device (64), in which coupling position the auxiliary drive (1) is locked to the person carrier or load carrier (3).

15. Separate auxiliary drive (1) according to any of claims 1 to 14, **characterised in that** the diameter (35) of the drive wheel (21) or drive wheels (21) is at most half the size of the diameter (37) of the wheels (39) of the pair of wheels (40) of the person carrier or load carrier (3) connected to the auxiliary drive (1).

## Revendications

1. Auxiliaire d'entraînement séparé (1) pour des moyens porte-personne ou porte-charge susceptibles de rouler, notamment pour des chaises roulantes (3), comprenant un moteur d'entraînement, au moins une roue motrice d'entraînement (21), au moins un siège (9) pour un conducteur, et un dispositif d'accouplement (5) à l'aide duquel l'auxiliaire d'entraînement (1) peut être fixé de manière amovible, répétée, au moyen porte-personne ou porte-charges (3), **caractérisé en ce que** le dispositif d'accouplement (5) comprend un accouplement d'axe (57), qui est conçu pour pouvoir être relié à l'axe ou aux axes (45) d'une paire de roues (40) du moyen porte-personne ou porte-charge (3), le siège (9) peut être déplacé d'une position de service (13) à une position de transport (67), le siège (9) est relié au dispositif d'accouplement (5) par l'intermédiaire d'un dispositif d'actionnement (64), et le dispositif d'accouplement (5), dans la position de transport (67), est transféré par l'intermédiaire du dispositif d'actionnement (64), dans une position de montage (68) dans laquelle l'auxiliaire d'entraînement (1) peut être fixé au moyen porte-personne ou porte-charge (3).

2. Auxiliaire d'entraînement séparé (1) selon la revendication 1, **caractérisé par** un timon (55) comprenant une branche transversale (53), qui est orientée transversalement à une direction de marche (29) du moyen porte-personne ou porte-charge (3), et est reliée à l'axe ou aux axes (45) de la paire de roues (40).

3. Auxiliaire d'entraînement séparé (1) selon la revendication 2, **caractérisé en ce que** le timon (55) présente une forme de T, le timon (55) comprenant entre la branche transversale (53) et la roue motrice d'entraînement (21), une barre de poussée (7) orientée dans la direction de marche (29).

4. Auxiliaire d'entraînement séparé (1) selon l'une des revendications 2 à 3, **caractérisé en ce que** la barre de poussée (7) du timon (55) en forme de T, orientée dans la direction de marche (29), est réglable en longueur.

5. Auxiliaire d'entraînement séparé (1) selon l'une des revendications 2 à 4, **caractérisé en ce que** la branche (53) orientée transversalement à la direction de marche (29), est reliée à la barre de poussée (7) orientée parallèlement à la direction de marche (29), par l'intermédiaire d'une articulation (66) rotative selon au moins deux axes.

6. Auxiliaire d'entraînement séparé (1) selon la revendication 5, **caractérisé en ce que** l'un des axes de l'articulation (66) est un axe de direction (65) d'un véhicule roulant combiné (43) constitué de l'auxiliaire d'entraînement (1) et du moyen porte-personne ou porte-charge (3), l'axe de direction (65) coupant un axe de rotation (61) de la paire de roues (40).

7. Auxiliaire d'entraînement séparé (1) selon l'une des revendications 5 ou 6, **caractérisé en ce qu'**un axe de pivotement (59) de l'articulation (65) est confondu avec l'axe de rotation (61) de la paire de roues (40).

8. Auxiliaire d'entraînement séparé (1) selon l'une des revendications 1 à 7, **caractérisé en ce que** le siège (9) est relié de manière imperdable avec l'auxiliaire d'entraînement (1), et se troue, au moins dans une position de service (13), au-dessus de la roue motrice d'entraînement (21) dans la direction de la force de gravité (17).

9. Auxiliaire d'entraînement séparé (1) selon l'une des revendications 1 à 8, **caractérisé en ce que** le siège (9) comprend un support (11) dont l'axe longitudinal (15) prolongé dans la direction de la force de gravité (17), coupe, dans une position de service, l'axe (19) de la roue motrice d'entraînement (21).

10. Auxiliaire d'entraînement séparé (1) selon l'une des revendications 1 à 9, **caractérisé en ce que** le volume ou cubage de l'auxiliaire d'entraînement (1) est plus faible dans la position de transport (67) que dans la position de service (13).

11. Auxiliaire d'entraînement séparé (1) selon l'une des revendications 1 à 10, **caractérisé en ce que** le support (11) pour le siège (9) est en forme de fourchette avec un côté à branche double et un côté à branche simple, et est relié de manière imperdable, sur son côté à double branche, à des organes de fixation (23) sur les côté du corps (25) de l'auxiliaire d'entraînement (1).

12. Auxiliaire d'entraînement séparé (1) selon la revendication 11, **caractérisé en ce que** le support (11) en forme de fourchette comporte une traverse (12), qui relie ensemble les deux branches de fourchette (14) du côté à double branche du support (11), et est accessible par le haut dans la position de transport (67).

13. Auxiliaire d'entraînement séparé (1) selon la revendication 12, **caractérisé en ce que** la traverse (12) est conçue en tant que poignée de portage (16) ou en tant que fixation pour une poignée de portage, de manière à pouvoir transporter l'auxiliaire d'entraînement (1) à l'aide de celle-ci, dans la position de transport (67).

14. Auxiliaire d'entraînement séparé (1) selon l'une des revendications 1 à 13, **caractérisé en ce que** dans la position de service (13), le dispositif d'accouplement (5) est transféré par le dispositif d'actionnement (64) dans une position d'accouplement (70) dans laquelle l'auxiliaire d'entraînement (1) est verrouillé au moyen porte-personne ou porte-charge (3).

15. Auxiliaire d'entraînement séparé (1) selon l'une des revendications 1 à 14, **caractérisé en ce que** le diamètre (35) de la roue motrice d'entraînement (21) ou des roues motrices d'entraînement (21) est tout au plus aussi grand que la moitié du diamètre (37) des roues (39) de la paire de roues (40) du moyen porte-personne ou porte-charge (3), reliée à l'auxiliaire d'entraînement (1).
